# EUROPEAN PATENT SPECIFICATION

(11) **EP 3 211 686 B1**
(45) Date of publication and mention of the grant of the patent: **13.03.2019**
(21) Application number: 16202751.0
(22) Date of filing: 07.12.2016
(51) Int. Cl.: H01M 2/02, H01M 2/10

(54) **POWER BATTERY PACK APPARATUS**
BATTERIEPACKUNGSVORRICHTUNG
APPAREIL DE BLOC BATTERIE D'ALIMENTATION

(30) Priority: 25.02.2016 CN 201610109698
(43) Date of publication of application: 30.08.2017
(73) Proprietor: Contemporary Amperex Technology Co., Limited, Jiaocheng District Ningde City Fujian 352100 (CN)
(72) Inventor: Pan, Ping, Ningde City, Fujian 352100 (CN); Yao, Jihua, Ningde City, Fujian 352100 (CN); Zhang, Haidong, Ningde City, Fujian 352100 (CN)
(74) Representative: Petraz, Gilberto Luigi

(56) References cited:
- EP-A1- 2 833 434
- JP-A- 2014 175 078
- KR-A- 20150 012 413
- US-A1- 2011 014 512
- US-A1- 2012 135 288
- US-A1- 2013 209 850

## Description

### TECHNICAL FIELD

The present invention relates to a power battery pack apparatus and, particularly, relates to a module design of a power battery system.

### BACKGROUND

In traditional battery packing technology, the cell module is usually packed adopting an adhering manner. In this context, document US2011/014512 discloses a battery module hosting a plurality of cells, which are stacked on one another. Each cell is provided with at least two connecting tabs protruding from a side portion of a cell and being fixed on a cell main body, wherein a set of connecting tabs is connected along a thickness direction of the cells by means of through bolts so that two adjacent cells or more are mechanically connected with each other. Document US2012/135288 discloses a battery cell module including a plurality of battery cells, each of which is firmly placed into a shell. Each shell frame comprises a plurality of protruding tabs having through-holes, in which bolts are inserted so to connect a plurality of shells along the thickness direction of a cell. Document KR20150012413 describes a battery cell module positioned on a base, wherein pressurizing elements being connected to slidable parts can move on said base and thus can compensate the swelling of the cell resulting from gas generation during operation. When structural adhesive is used to adhere the cells, if better adhesion of the adhesive is desired, a fixture must be used to clamp and fix the cells, and apply a pre-tightening force to the cell, so as to spread out the adhesive on the fitting surface of the cells. Such a structure exists the following defects:

Firstly, different fixtures need to be designed for cells of different sizes, which will increase cost;

Secondly, the cells need to be applied with a pre-tightening force, causing the cells be extruded, when the module is operating, the cells will expand, which increases the expanding force of the cells, and may greatly damage the structure of the module, resulting in a big risk of failure of the module.

### SUMMARY

The technical problem to be solved by the present invention is to provide a power battery pack apparatus which is grouped quickly with high safety performance.

Said power battery pack apparatus includes a plurality of cells and connecting components, the plurality of cells are successively stacked along a thickness direction of the cell to form a cell module, each of the cells includes a cell main body and at least two connecting tabs, all of the connecting tabs are protruded from a side portion of the cell main body, and are fixed with the cell main body, and two of the connecting tabs corresponding to any two adjacent cells are connected through a connecting component, so that the two adjacent cells are connected with each other. The power battery pack apparatus further includes a base carrying the cell module and a plurality of movable seats, the plurality of movable seats are respectively arranged at two symmetrical sides of the base, the cells located at both ends of the cell module are fixedly arranged with the movable seats of corresponding sides, and the movable seats are able to slide along the thickness direction of the cell.

Preferably, the connecting tabs of a cell for respectively connecting adjacent cells on both sides of the cell are spaced in a height direction of the cell, the height direction is a direction perpendicular to the base.

Preferably, a bolt hole is provided on the connecting tab, the connecting component includes a bolt and a nut, each group of the connecting tabs are connected by the bolt extending through the bolt hole and the nut.

Preferably, the movable seat includes a sliding groove and a sliding component which is accommodated in the sliding groove and cooperates with the sliding groove, the sliding groove is provided on the base along the thickness direction of the cell, the sliding component is connected with the cell.

Preferably, the connecting tabs corresponding to the sliding component are arranged on the cells located at both ends of the cell module, the connecting tabs are connected with the sliding component through the connecting component, so that the cell is connected with the sliding component.

Preferably, the sliding groove includes a sliding rail cooperating with the sliding component and a limiting plate which limits a sliding distance of the sliding component, the sliding component includes a limiting embossment cooperating with the limiting plate, a fixing component parallel to the limiting embossment and a carrying plate accommodated in the sliding rail which carries the limiting embossment and the fixing component, the fixing component is fixed with the cell.

Preferably, both the limiting embossment and the fixing component are provided with a supporting component cooperating with the sliding rail.

Preferably, a distance between the limiting embossment and the fixing component is larger than thickness of the connecting tab.

In the power battery pack apparatus of the present invention, adjacent cells are fitted to be a pack through the connecting tabs and the connecting component, so that it is unnecessary for the power battery pack apparatus of the present invention to adopt a fixture, thereby saving cost, and also achieving quick fixing and packing, and thus will not affect expansion of the cell, that is, the cell will not be subjected to outer resistance during the expanding process, thereby improving safety.

### BRIEF DESCRIPTION OF DRAWINGS

In order to illustrate the technical solutions in the embodiments of the present invention or the prior art more clearly, a brief introduction of the drawings used in the embodiments or the prior art will be provided here, obviously, the drawings described below are just some embodiments of the present invention, those skilled in the art can also obtain other drawings according to these drawings without creative work
FIG. 1 is an integral schematic diagram of a power battery pack apparatus of the present invention;
FIG. 2 is a structural schematic diagram of a first cell of the present invention;
FIG. 3 is a structural schematic diagram of a second cell of the present invention;
FIG. 4 is a schematic diagram of a base in FIG. 1;
FIG. 5 is an enlarged view of a sliding member in FIG. 1.

### DESCRIPTION OF EMBODIMENTS

For ease of understanding of the present invention, the present invention will be completely described referring to relevant drawings. The drawings provide preferred embodiments of the present invention. However, the present invention can be implemented in various forms, which is not limited to the embodiments described in the present disclosure. On the contrary, the objective of providing these embodiments is to achieve a clear and complete comprehension of the disclosed content of the present invention.

Unless otherwise defined, all the techniques and scientific terminologies used in the present disclosure have the same meanings as those generally understood by those skilled in the art of the present invention. In the present disclosure, the terminologies used in the specification of the present invention are only used for the purpose of describing the specific embodiments, rather than limiting the present invention. The terminology "and/or" used in the present disclosure includes any and all combinations of one or more relevant items listed.

Embodiments of the present invention will be described in detail with reference to the drawings.

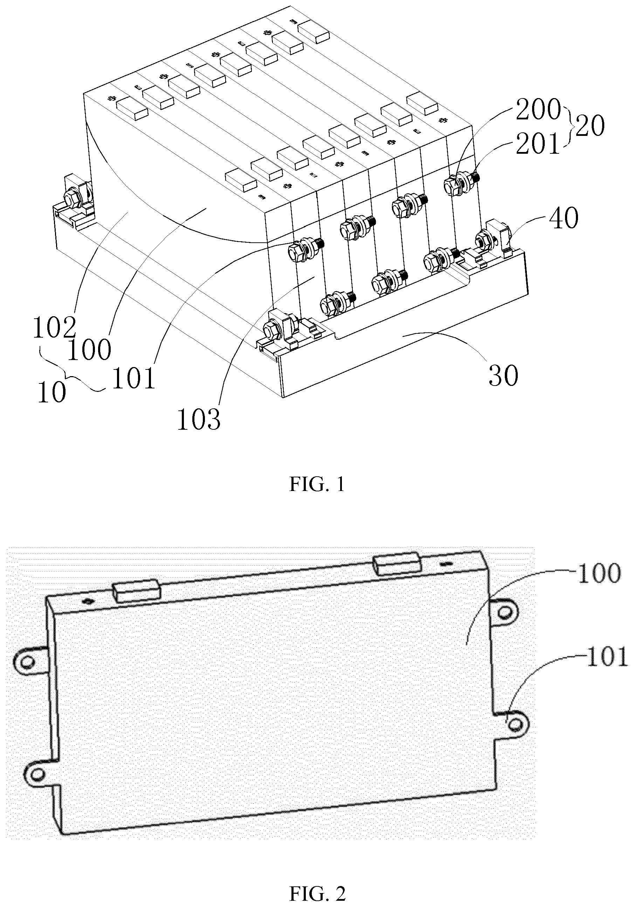

Please refer to FIG. 1, the present invention discloses a power battery pack apparatus (not labeled), the power battery pack apparatus includes a plurality of cells 10, a connecting component 20, a base 30 and a movable seat 40.

The drawing of the present embodiment shows eight cells 10. These cells 10 are successively stacked along thickness direction to form a cell module. Each cell 10 includes a cell main body 100 and at least two connecting tabs 101, the connecting tabs 101 are all protruded from the side portion of the cell main body 100, and need to be kept fixed with respect to the cell main body 100. At least a group of oppositely arranged connecting tabs 101 should be provided at the side portion of the cell main body 100 between any two adjacent cells 10, it is preferred that a group of connecting tabs 101 should be provided at both sides of the two adjacent cell main bodies 100 at the same time, so as to connect with each other. Each group of connecting tabs 101 is connected through a connecting component 20, so that the two adjacent cells 10 can be connected with each other.

The adjacent cells 10 can be fitted tightly through the cooperation of the connecting tabs 101 and the connecting component 20, so as to fix all the cells 10 to form a cell module, therefore, it is unnecessary to use a fixture, which saves cost, and also achieves the effect of quick fixing and packing. At the same time, since the connecting manner is to implement the connection at the side portion of the cell, which will not extrude the cell, and thus will not affect expansion of the cell, that is, the cell will not be subjected to outer resistance during expanding process, thereby improving safety.

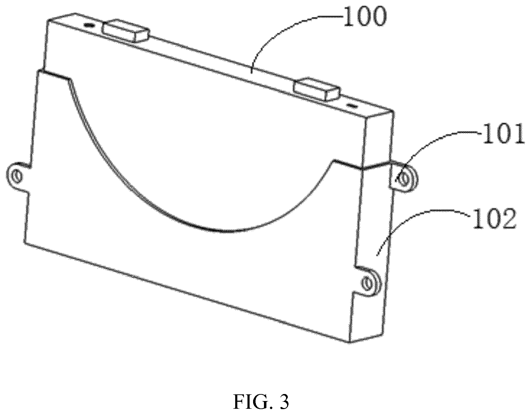

In the present embodiment, the connecting tab 101 has two fixing manners. As shown in FIG. 2, the first manner is to fix the connecting tab 101 on the cell main body 100. As shown in FIG. 3, the second manner is to arrange the connecting tab 101 on a shell in advance, and then arrange the cell main body 100 in the shell. Specifically, as shown in FIG. 1, the shell can be divided into two different structures: a first shell 102 and a second shell 103.

A connecting tab 101 is protruded from both the upside and the downside of the first shell 102, and a connecting tab 101 is also protruded from both the upside and the downside of the second shell 103. The first shell 102 and the second shell 103 are alternatively arranged, the connecting tabs 101 located at the upsides of the first shell 102 and the second shell 103 form a group, and the connecting tabs 101 located at the downsides thereof also form a group. Each group of connecting tabs 101 can be connected through a connecting component 20, respectively.

In the present embodiment, the number of the connecting tabs 102 on the first shell 102 and the second shell 103 is not limited to four, which can be added according to needs. The connecting tabs 101 for connecting with other cells 10 at both sides are arranged on the upside and downside of each cell 10, so that they can have enough space to assemble the connecting components. Absolutely, if the cell 10 is thick enough, all the connecting tabs 101 can be arranged at the same height.

In order to connect the connecting component 20 conveniently, the group of connecting tabs 101 located on the first shell 102 and the second shell 103 can be arranged close to each other. The connecting tabs 101 can be welded on the first shell 102 and the second shell 103 through a welding manner, and can also be integrated as a whole on the first shell 102 and the second shell 103.

The connecting component 20 can adopt connecting structures such as clamping, riveting, screwing and the like. For example, a bolt hole (not labeled) is provided on all the connecting tabs 101, the connecting component 20 includes a bolt 200 and a nut 201, each group of connecting tabs 101 is connected through the bolt 200 extending through the bolt hole and the nut 201.

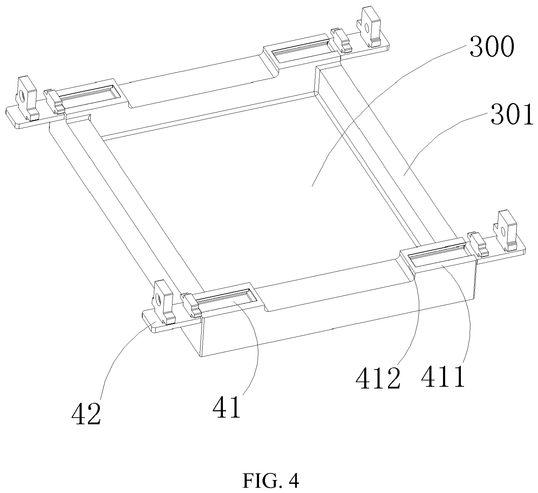

As shown in FIG. 4, in the present embodiment, the base 30 is adopted to fix the cell module, the base 30 includes a base plate 300 and four side plates 301 which are protruded from the edge of the base plate 300 and are perpendicular to the base plate 300, the side plates 301 encloses to form a rectangle frame (not labeled). A plurality of movable seats 40 are provided, which are arranged respectively at the symmetrical sides of the base 30, in the present embodiment, a pair of movable seats 40 can be arranged on a pair of parallel side plates 301, respectively. And the cells 10 located at both ends of the cell module are fixedly arranged with the movable seat 40 of corresponding sides. The movable seat 40 is configured to connect the cell module with the base 30, so as to fix the cell module on the base 30. At the same time, the movable seat 40 can also slide with respect to the base 30 for a certain extent, so that the cell will not be constrained when expanding, so as to improve safety.

The rectangle frame and the base plate 300 form a big groove, so as to accommodate the cell module which has been fixed tightly. And the height of the side plate 301 is less than the height of the connecting tab 101, so as to avoid the packed cells 10 from conflicting with the side plate 301 during the sliding process, thereby improving the safety and service life of the module. The base 30 is made of aluminum alloy material, such arrangement makes the base 30 lightweight and be able to conduct the heat dissipated by the battery effectively, which is convenient for heat dissipation.

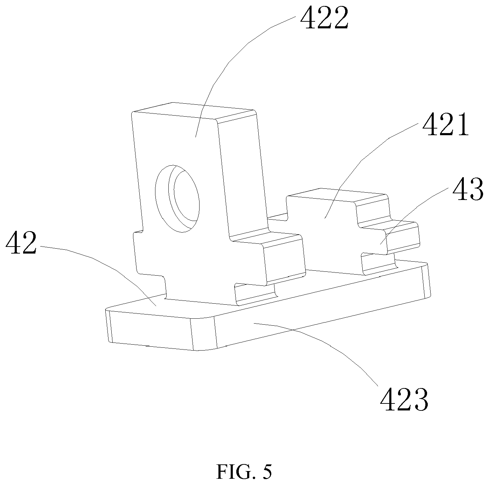

As shown in FIG. 5, the movable seat 40 includes a sliding groove 41 and a sliding component 42 which is accommodated in the sliding groove 41 and cooperates with the sliding groove 41, the sliding component 42 is fixedly connected with the first shell 102 and/or the second shell 103. The sliding groove 41 includes a sliding rail 411 cooperating with the sliding component 42 and a limiting plate 412 which limits the sliding distance of the sliding component 42. The sliding component 42 includes a limiting embossment 421 cooperating with the limiting plate 412, a fixing component 422 parallel to the limiting embossment 421 and a carrying plate 423 accommodated in the sliding rail 411 which carries the limiting embossment 421 and the fixing component 422, the fixing component 422 is fixed with the first shell 102 and/or the second shell 103 through bolt and nut. The limiting embossment 421 and the fixing component 422 are both provided with a supporting component 43 for cooperating with the sliding rail 411. The distance between the limiting embossment 421 and the fixing component 422 is much larger than the thickness of the connecting tab 101. The material of the movable seat 40 is nylon, so that both the sliding component 42 and the sliding groove 41 are relatively wear-resisting, which improves the service life of the power battery pack apparatus of the present invention.

An insulating plate (not labeled) and a thermal conductive adhesive (not labeled) used for conducting heat of the battery are provided between the cell 10 and the base 40, the thermal conductive adhesive is provided under the insulating plate, the thermal conductive adhesive is configured to conduct the heat of the cell 10, so as to facilitate heat dissipation.

The operating principle of the present invention is: the cell 10 is accommodated in the first shell 102 and the second shell 103, the first shell 102 and the second shell 103 are alternatively arranged, and are fixedly connected as a cell module by the connecting tab 101, the bolt 200, the bolt hole and the nut 201, the cell module is placed in the groove of the base 40, the outmost first shell 102 and second shell 103 are fixedly connected with the movable seat 40 through a connecting tab 101 respectively.

The carrying plate 423 slides in from an end of the sliding groove 41, and is limited by the sliding rail 411 in vertical direction, adjusting the sliding component 42, so that the fixing component 422 is aligned with the connecting tab 101, and then fixing by using bolt and nut. When the cell module is expanding in the groove, the sliding component 42 slides to any of the two sides along the sliding rail 411, so that the cell 10 will not be blocked when expanding, moreover, the side plate 301 of the base 40 and the limiting embossment 421 of the movable seat 40 further limit the cell module, so as to prevent the cell module from sliding out of the groove.

The supporting component 43 of the limiting embossment 421 and fixing component 422 on the movable seat 40 abut and press on the sliding rail 411, two supporting components 43 are provided at the front and back respectively, so as to balance the force subjected by the cell module.

In the power battery pack apparatus of the present invention, eight cells 10 through are packed into a module through the first shell 102 and the second shell 103 accommodating the cell 10, and then connecting and fixing the first shell 102 and the second shell 103 through the bolt 200 and the nut 201, at the same time, the movable seat 40 is adopted to prevent the cell module from being blocked by outer force when expanding, so that the cell 10 of the present invention can be fixed into a module quickly, and will not affect the battery expanding, that is, in the battery expanding process, it will not receive outer resistance, so as to improve safety of the battery and show better heat dissipation effect.

The above-mentioned embodiments only illustrate several implementing manners of the present invention, the description thereof are specific and in detail, which, however, cannot be understood as the limitation of the protection scope of the present invention. It should be understood that, for those skilled in the art, various transformations and improvements can be proposed without departing from the protection scope of the present invention defined by the claims. Therefore, the protection scope of the present invention should be subject to the accompanying claims.

## Claims

1. A power battery pack apparatus, **characterized in that**, the power battery pack apparatus comprises a plurality of cells (10) and connecting components (20),
the plurality of cells (10) are successively stacked along a thickness direction of the cell to form a cell module, each of the cells (10) comprises a cell main body (100) and at least two connecting tabs (101),
all of the connecting tabs (101) are protruded from a side portion of the cell main body, and are fixed with the cell main body (100), and two of the connecting tabs (101) corresponding to any two adjacent cells (10) are connected through a connecting component (20), so that the any two adjacent cells (10) are connected with each other,
the power battery pack apparatus further comprises a base (30) carrying the cell module and a plurality of movable seats (40),
the plurality of movable seats (40) are respectively arranged at two symmetrical sides of the base (30), the cells (10) located at both ends of the cell module are fixedly arranged with the movable seats (40) of corresponding sides, and the movable seats (40) are able to slide along the thickness direction of the cell.

2. The power battery pack apparatus according to claim 1, **characterized in that**, the connecting tabs (101) of a cell for respectively connecting adjacent cells (10) on both sides of the cell (10) are spaced in a height direction of the cell, wherein the height direction is a direction perpendicular to the base (30).

3. The power battery pack apparatus according to claim 1, **characterized in that**, a bolt hole is provided on the connecting tab (101), the connecting component (20) comprises a bolt (200) and a nut (201), each group of the connecting tabs (101) are connected by the bolt (200) extending through the bolt hole and the nut (201).

4. The power battery pack apparatus according to claim 1, **characterized in that**, the movable seat (40) comprises a sliding groove (41) and a sliding component (42) which is accommodated in the sliding groove (41) and cooperates with the sliding groove (41), the sliding groove (41) is provided on the base (30) along the thickness direction of the cell, the sliding component (42) is connected with the cell.

5. The power battery pack apparatus according to claim 4, **characterized in that**, the connecting tabs (101) corresponding to the sliding component (42) are arranged on the cells (10) located at both ends of the cell module, the connecting tabs (101) are connected with the sliding component (42) through the connecting component (20), so that the cell is connected with the sliding component (42).

6. The power battery pack apparatus according to claim 5, **characterized in that**, the sliding groove (41) comprises a sliding rail (411) cooperating with the sliding component (42) and a limiting plate (412) which limits a sliding distance of the sliding component (42), the sliding component (42) comprises a limiting embossment (421) cooperating with the limiting plate (412), a fixing component (422) parallel to the limiting embossment (421) and a carrying plate accommodated in the sliding rail (411) which carries the limiting embossment (421) and the fixing component (422), the fixing component (422) is fixed with the cell.

7. The power battery pack apparatus according to claim 6, **characterized in that**, both the limiting embossment (421) and the fixing component (422) are provided with a supporting component (43) cooperating with the sliding rail (411).

8. The power battery pack apparatus according to claim 7, **characterized in that**, a distance between the limiting embossment (421) and the fixing component (422) is larger than thickness of the connecting tab (101).

## Patentansprüche

1. Strombatteriepackungsvorrichtung, **dadurch gekennzeichnet, dass** die Strombatteriepackungsvorrichtung eine Vielzahl von Zellen (10) und Verbindungskomponenten (20) umfasst,
die Vielzahl von Zellen (10) entlang einer Dickenrichtung der Zelle nacheinander gestapelt sind, um ein Zellenmodul zu bilden, jede der Zellen (10) einen Zellenhauptkörper (100) und zumindest zwei Verbindungslaschen (101) umfasst,
alle Verbindungslaschen (101) aus einem Seitenabschnitt des Zellenhauptkörpers vorspringen und mit dem Zellenhauptkörper (100) befestigt sind, und zwei der Verbindungslaschen (101), die zwei beliebigen benachbarten Zellen (10) entsprechen, über eine Verbindungskomponente (20) verbunden sind, so dass die zwei beliebigen benachbarten Zellen (10) miteinander verbunden sind,
die Strombatteriepackungsvorrichtung ferner eine Basis (30) umfasst, die das Zellenmodul und eine Vielzahl von beweglichen Aufnahmen (40) trägt,
die Vielzahl von beweglichen Aufnahmen (40) jeweils an zwei symmetrischen Seiten der Basis (30) angeordnet sind, die Zellen (10), die an beiden Enden des Zellenmoduls gelegen sind, mit den beweglichen Aufnahmen (40) von entsprechenden Seiten fest angeordnet sind, und die beweglichen Aufnahmen (40) entlang der Dickenrichtung der Zelle gleiten können.

2. Strombatteriepackungsvorrichtung nach Anspruch 1, **dadurch gekennzeichnet, dass** die Verbindungslaschen (101) einer Zelle, um jeweils benachbarte Zellen (10) an beiden Seiten der Zelle (10) zu verbinden, in einer Höhenrichtung der Zelle beabstandet sind, worin die Höhenrichtung eine zur Basis (30) senkrechte Richtung ist.

3. Strombatteriepackungsvorrichtung nach Anspruch 1, **dadurch gekennzeichnet, dass** ein Schraubenloch an der Verbindungslasche (101) vorgesehen ist, die Verbindungskomponente (20) eine Schraube (200) und eine Mutter (201) umfasst, jede Gruppe der Verbindungslaschen (101) von der Schraube (200) verbunden ist, die sich durch das Schraubenloch und die Mutter (201) erstreckt.

4. Strombatteriepackungsvorrichtung nach Anspruch 1, **dadurch gekennzeichnet, dass** die bewegliche Aufnahme (40) eine Gleitnut (41) und eine Gleitkomponente (42) umfasst, die in der Gleitnut (41) untergebracht ist und mit der Gleitnut (41) zusammenarbeitet, die Gleitnut (41) in der Basis (30) entlang der Dickenrichtung der Zelle vorgesehen ist, die Gleitkomponente (42) mit der Zelle verbunden ist.

5. Strombatteriepackungsvorrichtung nach Anspruch 4, **dadurch gekennzeichnet, dass** die Verbindungslaschen (101), die der Gleitkomponente (42) entsprechen, an den Zellen (10) angeordnet sind, die an beiden Enden des Zellenmoduls gelegen sind, die Verbindungslaschen (101) mit der Gleitkomponente (42) durch die Verbindungskomponente (20) verbunden sind, so dass die Zelle mit der Gleitkomponente (42) verbunden ist.

6. Strombatteriepackungsvorrichtung nach Anspruch 5, **dadurch gekennzeichnet, dass** die Gleitnut (41) eine Gleitschiene (411), die mit der Gleitkomponente (42) zusammenarbeitet, und eine Begrenzungsplatte (412), die einen Gleitabstand der Gleitkomponente (42) begrenzt, umfasst, die Gleitkomponente (42) eine Begrenzungsprägung (421), die mit der Begrenzungsplatte (412) zusammenarbeitet, eine Befestigungskomponente (422), die zur Begrenzungsprägung (421) parallel ist, und eine Tragplatte umfasst, die in der Gleitschiene (411) untergebracht ist, die die Begrenzungsprägung (421) und die Befestigungskomponente (422) trägt, die Befestigungskomponente (422) mit der Zelle befestigt ist.

7. Strombatteriepackungsvorrichtung nach Anspruch 6, **dadurch gekennzeichnet, dass** sowohl die Begrenzungsprägung (421) als auch die Befestigungskomponente (422) mit einer Stützkomponente (43) versehen sind, die mit der Gleitschiene (411) zusammenarbeitet.

8. Strombatteriepackungsvorrichtung nach Anspruch 7, **dadurch gekennzeichnet, dass** ein Abstand zwischen der Begrenzungsprägung (421) und der Befestigungskomponente (422) größer als die Dicke der Verbindungslasche (101) ist.

## Revendications

1. Appareil bloc-batterie d'alimentation, **caractérisé en ce que** l'appareil bloc-batterie d'alimentation comprend une pluralité de cellules (10) et de composants de connexion (20),
la pluralité de cellules (10) sont successivement empilées le long d'une direction d'épaisseur de la cellule pour former un module de cellules, chacune des cellules (10) comprenant un corps principal de cellule (100) et au moins deux pattes de connexion (101),
toutes les pattes de connexion (101) font saillie depuis une partie latérale du corps principal de cellule et sont fixées au corps principal de cellule (100), et deux des pattes de connexion (101) correspondant à deux cellules adjacentes quelconques (10) sont connectées par un composant de connexion (20), de sorte que les deux cellules adjacentes quelconques (10) sont connectées l'une à l'autre,
l'appareil bloc-batterie d'alimentation comprend en outre une base (30) portant le module de cellules et une pluralité de sièges mobiles (40),
la pluralité de sièges mobiles (40) sont agencés respectivement sur deux côtés symétriques de la base (30), les cellules (10) situées aux deux extrémités du module de cellules sont agencées de manière fixe avec les sièges mobiles (40) de côtés correspondants, et les sièges mobiles (40) peuvent coulisser dans la direction d'épaisseur de la cellule.

2. Appareil bloc-batterie d'alimentation selon la revendication 1, **caractérisé en ce que** les pattes de connexion (101) d'une cellule pour connecter respectivement des cellules adjacentes (10) des deux côtés de la cellule (10) sont espacées dans une direction de hauteur de la cellule, dans lequel la direction de hauteur est une direction perpendiculaire à la base (30).

3. Appareil bloc-batterie d'alimentation selon la revendication 1, **caractérisé en ce qu'**un trou de boulon est prévu sur la patte de connexion (101), le composant de connexion (20) comprend un boulon (200) et un écrou (201), chaque groupe des pattes de connexion (101) sont connectées par le boulon (200) s'étendant à travers le trou de boulon et l'écrou (201).

4. Appareil bloc-batterie d'alimentation selon la revendication 1, **caractérisé en ce que** le siège mobile (40) comprend une rainure de coulissement (41) et un composant coulissant (42) qui est reçu dans la rainure de coulissement (41) et coopère avec la rainure de coulissement (41), la rainure de coulissement (41) est prévue sur la base (30) dans la direction d'épaisseur de la cellule, le composant coulissant (42) est relié à la cellule.

5. Appareil bloc-batterie d'alimentation selon la revendication 4, **caractérisé en ce que** les pattes de connexion (101) correspondant au composant coulissant (42) sont agencées sur les cellules (10) situées aux deux extrémités du module de cellules, les pattes de connexion (101) sont connectées au composant coulissant (42) par le biais du composant de connexion (20), de sorte que la cellule est connectée au composant coulissant (42).

6. Appareil bloc-batterie d'alimentation selon la revendication 5, **caractérisé en ce que** la rainure de coulissement (41) comprend un rail de coulissement (411) coopérant avec l'élément coulissant (42) et une plaque de limitation (412) qui limite une distance de coulissement du composant coulissant (42), le composant coulissant (42) comprend un relief de limitation (421) coopérant avec la plaque de limitation (412), un composant de fixation (422) parallèle au relief de limitation (421) et une plaque de support reçue dans le rail de coulissement (411) qui supporte le relief de limitation (421) et le composant de fixation (422), le composant de fixation (422) est fixé à la cellule.

7. Appareil bloc-batterie d'alimentation selon la revendication 6, **caractérisé en ce que** le relief de limitation (421) et l'élément de fixation (422) sont pourvus d'un composant de support (43) coopérant avec le rail de coulissement (411).

8. Appareil bloc-batterie d'alimentation selon la revendication 7, **caractérisé en ce qu'**une distance entre le relief de limitation (421) et le composant de fixation (422) est supérieure à une épaisseur de la patte de connexion (101).
